# EUROPÄISCHE PATENTSCHRIFT

(11) **EP 4 362 243 B1**
(45) Veröffentlichungstag und Bekanntmachung des Hinweises auf die Patenterteilung: **11.11.2026**
(21) Anmeldenummer: 23200139.6
(22) Anmeldetag: 27.09.2023
(51) Int. Cl.: H01R 43/042, G01N 3/08

(54) **VERFAHREN ZUR ÜBERPRÜFUNG DER QUALITÄT EINER CRIMPVERBINDUNG SOWIE SYSTEM HIERZU**
METHOD FOR CHECKING THE QUALITY OF A CRIMP CONNECTION AND SYSTEM FOR SAME
PROCÉDÉ DE VÉRIFICATION DE LA QUALITÉ D'UNE LIAISON SERTIE ET SYSTÈME ASSOCIÉ

(30) Priorität: 28.10.2022 DE 102022128652
(43) Veröffentlichungstag der Anmeldung: 01.05.2024
(73) Patentinhaber: TKR Spezialwerkzeuge GmbH, 58285 Gevelsberg (DE)
(72) Erfinder: Kreischer, Torsten, 58300 Wetter (DE); Weyland, Thorsten, 58313 Herdecke (DE)
(74) Vertreter: Kalkoff & Partner Patentanwälte mbB

(56) Entgegenhaltungen:
- EP-A1- 0 460 441
- WO-A1-2015/179585
- US-A1- 2012 137 486
- US-A1- 2020 106 230
- US-A1- 2021 397 155

## Beschreibung

Die Erfindung betrifft ein Verfahren zur Überprüfung der Qualität einer Crimpverbindung mittels einer zur Herstellung der Crimpverbindung geeigneten, handhaltbaren Zug- und Druckvorrichtung sowie eine handhaltbare Zug- und Druckvorrichtung und ein System zur Durchführung des Verfahrens.

Crimpverbindungen, d.h. Verbindungen, die durch Anschlagen eines Crimpkontakts an einen Leiter mit einer oder mehreren Litzen hergestellt werden, sowie stationäre Crimpmaschinen oder mobile Crimpzangen zur Herstellung der Crimpverbindung sind in vielfältigen Ausgestaltungen aus dem Stand der Technik bekannt. Um eine gute und sichere Verbindung des Crimpkontakts mit der Litze zu gewährleisten, ist eine Überprüfung der Qualität der Crimpverbindung erforderlich.

Zur Beurteilung der Qualität von Crimpverbindungen wird neben der üblicherweise in Laboren bestimmten Crimphöhe insbesondere die Auszugskraft, d.h. die Zugfestigkeit von Crimpverbindungen ermittelt. Die Kenntnis über die Auszugskraft ermöglicht bereits unabhängig von der Crimphöhe wichtige Rückschlüsse über die Qualität der Crimpverbindung und wird üblicherweise von separaten Messwerkzeugen und/oder -vorrichtungen ermittelt. Derzeit ist eine flexible und mobile Überprüfung der Qualität von Crimpverbindungen, beispielsweise in einem Kraftfahrzeugwerkstattbetrieb nur eingeschränkt möglich und erfordert üblicherweise den Ausbau der Crimpverbindung sowie den Transport zu einer stationären Messvorrichtung, sodass bekannte Verfahren zur Überprüfung der Qualität von Crimpverbindungen umständlich und kostenintensiv sind. Das Dokument US2012/0137486 A1 offenbart eine Crimpvorrichtung mit einem System zur Überwachung der Crimpqualität.

Handhaltbare Zug- und Druckvorrichtungen, die eine Antriebseinheit mit einem elektromotorisch angetriebenen Gewindetrieb aufweisen, sind beispielsweise als Niet- und Pressvorrichtungen aus dem Stand der Technik bekannt und kommen beispielsweise in Werkstattbetrieben, insbesondere in Kraftfahrzeugwerkstätten, im Rahmen von Reparaturarbeiten an der Karosserie von Fahrzeugen zum Einsatz.

Hiervon ausgehend liegt der Erfindung die Aufgabe zugrunde, ein Verfahren zur Überprüfung der Qualität einer Crimpverbindung mittels einer zur Herstellung der Crimpverbindung geeigneten, handhaltbaren Zug- und Druckvorrichtung sowie eine handhaltbare Zug- und Druckvorrichtung und ein System zur Durchführung des Verfahrens bereitzustellen, die auf einfache und zuverlässige Weise die Bestimmung der Qualität der Crimpverbindung ermöglichen.

Die Erfindung löst die Aufgabe durch ein Verfahren mit den Merkmalen des Anspruchs 1, eine handhaltbare Zug- und Druckvorrichtung mit den Merkmalen des Anspruchs 11 sowie ein System mit den Merkmalen des Anspruchs 12. Vorteilhafte Weiterbildungen sind in den abhängigen Ansprüchen angegeben.

Die handhaltbare Zug- und Druckvorrichtung weist eine einen akkubetriebenen Elektromotor aufweisende Antriebseinheit sowie einen mit dem Elektromotor verbundenen und in einem Gehäusekörper angeordneten Gewindetrieb zum Übertragen von aus der Drehrichtung des Elektromotors resultierenden Zug- und Druckkräften auf eine Kopplungseinheit auf. Weiter weist die handhaltbare Zug- und Druckvorrichtung eine mit der Kopplungseinheit verbundene Stempelaufnahme und eine an dem Gehäusekörper angeordnete Matrizenaufnahme sowie eine Sensoreinheit zur Erfassung der Zug- und Druckkräfte und/oder des Verstellwegs der Stempelaufnahme auf.

Bei dem erfindungsgemäßen Verfahren zur Überprüfung der Qualität einer Crimpverbindung mittels einer zur Herstellung der Crimpverbindung geeigneten, handhaltbaren Zug- und Druckvorrichtung werden die folgenden Verfahrensschritte ausgeführt:
- Anordnen eines Crimphalters an der Stempelaufnahme zur Festlegung eines Crimpkontakts einer Crimpverbindung;
- Anordnen eines Kabelhalters an der Matrizenaufnahme zur Festlegung eines Kabels der Crimpverbindung;
- Übertragen einer von dem Gewindetrieb über die Kopplungseinheit durch den Crimphalter auf den Crimpkontakt übertragenen Zugkraft auf die Crimpverbindung;
- Ermitteln der Zugfestigkeit der Crimpverbindung durch Erfassung der Zugkraft des Crimphalters und/oder Erfassung des Verstellwegs des Crimphalters mittels der Sensoreinheit.

Der Crimphalter und der Matrizenhalter werden jeweils beispielsweise durch einen Werkstattmitarbeiter in der Stempelaufnahme und der Matrizenaufnahme der handhaltbaren Zug- und Druckvorrichtung angeordnet. Das Kabel der Crimpverbindung wird an dem Matrizenhalter und der Crimpkontakt der Crimpverbindung wird an dem Crimphalter angeordnet, insbesondere befestigt. Beispielsweise wird der Crimpkontakt am Crimphalter und/oder das Kabel am Kabelhalter in geeigneten Klemmvorrichtungen oder anderen Zugkräfte übertragenden Mitteln festgehalten.

Zur Einleitung des Prüfvorgangs wird das Drehmoment des Elektromotors durch den Gewindetrieb in eine Zugkraft umgewandelt und über die Kopplungseinheit von dem Gewindetrieb auf den Crimphalter und den Crimpkontakt übertragen. Die auf den Crimphalter und die Crimpverbindung wirkende Zugkraft und/oder der Verstellweg des Crimphalters wird mittels der Sensoreinheit erfasst. Die Sensoreinheit ist dazu ausgebildet, den Verstellweg der Stempelaufnahme, die Zieh- und Druckkräfte und/oder das Drehmoment des Elektromotors zu überwachen. Durch die Erfassung der Zugkraft und/oder des Verstellwegs während des Prüfvorgangs wird die Zugfestigkeit der Crimpverbindung ermittelt.

Durch die Verwendung der handhaltbaren Zug- und Druckvorrichtung kann auf bisher notwendige Transporte zu und Messungen an stationären Messvorrichtungen verzichtet werden. Das erfindungsgemäße Verfahren ermöglicht auf einfache Weise eine einfache und zuverlässige Qualitätsüberprüfung von Crimpverbindungen vor Ort, beispielsweise in einem Werkstattbetrieb.

Grundsätzlich kann eine beliebige, beispielsweise zuvor in einem Kraftfahrzeug verbaute oder mittels einer stationären Crimpmaschine hergestellte Crimpverbindung überprüft werden. Nach einer vorteilhaften Weiterbildung der Erfindung ist jedoch vorgesehen, dass eine zuvor mittels der handhaltbaren Zug- und Druckvorrichtung hergestellte Crimpverbindung überprüft wird, wobei zur Überprüfung der Crimpverbindung der Crimphalter anstelle eines Crimpstempels in der Stempelaufnahme und der Kabelhalter anstelle einer Crimpmatrize in der Matrizenaufnahme angeordnet wird. Eine Crimpverbindung ist in der Regel eine feste und gasdichte Verbindung des Crimpkontakts mit einer Litze oder mehreren Litzen, d.h. einem Litzenverbund, des Kabels.

Zur Herstellung der Crimpverbindung sind der Crimpstempel an der Stempelaufnahme und die Crimpmatrize an der Matrizenaufnahme angeordnet oder werden, z.B. durch einen Nutzer angeordnet. Unter einem Crimpstempel wird hierbei ein zur Verformung des Crimpkontakts und/oder der Litze geeignetes Werkzeug verstanden. Die Crimpmatrize beschreibt einen Amboss, der zur Zentrierung des Crimpkontakts ausgebildet ist. Das Kabel wird manuell, z.B. durch einen Nutzer mittels einer Abisolierzange oder maschinell beispielsweise in einer Abisoliervorrichtung abisoliert. Der Crimpkontakt wird an der Crimpmatrize angeordnet und die freigelegte Litze wird an dem Crimpkontakt positioniert. Die Positionierung der Litze und/oder die Anordnung des Crimpkontakts erfolgt beispielweise durch einen Nutzer und wird bevorzugt durch ein an der Matrizenaufnahme angeordnetes Positionierelement unterstützt.

Sobald der Crimpkontakt und das Kabel mit der Litze an der Crimpmatrize angeordnet sind, wird der Crimpvorgang gestartet. Hierzu wird durch den Gewindetrieb das Drehmoment des Elektromotors in eine Druckkraft umgewandelt und über die Kopplungseinheit an den Crimpstempel übertragen. Dabei wird der Crimpstempel in Längsachsenrichtung der Stempelaufnahme in Richtung auf die Crimpmatrize verstellt. Die Druckkraft wird über den Crimpstempel auf den Crimpkontakt übertragen und der Crimpkontakt mittels des Crimpstempels zumindest abschnittsweise plastisch verformt. Hierdurch wird eine feste und gasdichte Crimpverbindung zwischen dem Crimpkontakt und dem Kabel hergestellt.

Zur Überprüfung der mittels der handhaltbaren Zug- und Druckvorrichtung hergestellten Crimpverbindung wird anschließend der Crimphalter anstelle des Crimpstempels in der Stempelaufnahme und der Kabelhalter anstelle der Crimpmatrize in der Matrizenaufnahme angeordnet.

Indem die Crimpverbindung mittels der handhaltbaren Zug- und Druckvorrichtung hergestellt und überprüft wird, wird zusätzlich zu der Überprüfung der Qualität der Crimpverbindung eine Einrichtung des Crimpvorgangs ermöglicht. Anhand der ermittelten Zugfestigkeit kann ein Nutzer beispielsweise die beim Crimpvorgang eingesetzte Druckkraft, d.h. die Kraft, mit der Litze und Crimpkontakt gepresst werden, anpassen.

Die mittels der Sensoreinheit erfassten Zugkräfte und /oder der Verstellweg des Crimphalters können beispielsweise auf einem Display der handhaltbaren Zug- und Druckvorrichtung angezeigt und von einem Nutzer zur Ermittlung der Zugfestigkeit der Crimpverbindung notiert werden. Nach einer vorteilhaften Weiterbildung der Erfindung ist jedoch vorgesehen, dass die Zugfestigkeit mittels einer mit der Sensoreinheit verbundenen Steuereinheit und/oder mittels eines über eine Sende- und Empfangseinheit mit einer Kommunikationseinheit der handhaltbaren Zug- und Druckvorrichtung verbunden mobilen Handgeräts und/oder einer über eine drahtlose Verbindung mit der handhaltbaren Zug- und Druckvorrichtung oder dem mobilen Handgerät verbundenen Servereinheit ermittelt wird.

Zur Ermittlung der Zugfestigkeit werden die von der Sensoreinheit erfassten Zugkräfte und/oder der erfasste Verstellweg der Stempelaufnahme an die Steuereinheit oder bevorzugt über die Kommunikationseinheit an die Sende- und Empfangseinheit des mobilen Handgeräts und besonders bevorzugt über die drahtlose Verbindung mittels der Sende- und Empfangseinheit von dem mobilen Handgerät an die Servereinheit übertragen. Die Steuereinheit ist über die Kommunikationseinheit beispielsweise über ein Kabel oder ebenfalls über eine drahtlose Verbindung mit der Sende- und Empfangseinheit des mobilen Handgeräts verbunden. Die drahtlose Verbindung zwischen der Kommunikationseinheit und der Sende- und Empfangseinheit oder der Sende- und Empfangseinheit und der Servereinheit erfolgt beispielsweise über Bluetooth, ein Mobilfunknetz oder über eine WLAN-Verbindung, z.B. in einem Werkstattbetrieb. Beispielsweise wird die Zugfestigkeit der Crimpverbindung durch eine Auswertung der Zugkräfte und/oder des Verstellwegs in der Steuereinheit, dem mobilen Handgerät oder der Servereinheit ermittelt und auf dem Display der handhaltbaren Zug- und Druckvorrichtung oder einer Anzeigeeinheit des mobilen Handgeräts dargestellt.

Indem die Zugfestigkeit in der Steuereinheit, dem mobilen Handgerät oder der Servereinheit ermittelt wird, kann die Überprüfung der Qualität der Crimpverbindung auf vorteilhafte Weise weiter vereinfacht werden.

Die Zugkraft kann beispielsweise in zufälligen oder festlegbaren Zeitschritten und/oder Zeitintervallen von der Sensoreinheit erfasst werden. Die Zugfestigkeit wird hierbei beispielsweise in der Steuereinheit, dem mobilen Handgerät oder der Servereinheit durch eine Extrapolation der zu den Zeitschritten und/oder Zeitintervallen ermittelten Zugkräfte ermittelt. Nach einer vorteilhaften Weiterbildung der Erfindung ist jedoch vorgesehen, dass die Zugkraft über eine definierbare Prüfdauer erfasst wird und die erfassten Daten zur Überprüfung der Qualität der Crimpverbindung mit in dem mobilen Handgerät oder in einer Datenbank der Servereinheit hinterlegten Referenzdaten abgeglichen werden. Unter einer definierbaren Prüfdauer wird ein mittels der Steuereinheit und/dem mobilen Handgerät einstellbarer Zeitraum zur Erfassung der Zugkraft der Stempelaufnahme verstanden. Bevorzugt wird als Prüfdauer der Zeitraum des Prüfvorgangs eingestellt. Die während der Prüfdauer erfassten Daten, d.h. die Zugkräfte zu vorgegebenen Zeitschritten, z.B. in Sekunden, und bevorzugt der erfasste Verstellweg der Stempelaufnahme, werden an das mobile Handgerät und/oder die Servereinheit übertragen. In dem mobilen Handgerät oder bevorzugt der Datenbank der Servereinheit sind Referenzdaten zum Abgleich mit den erfassten Daten hinterlegt. Unter Referenzdaten werden hierbei erfasste Zugkräfte und/oder Verstellwege der Stempelaufnahme und/oder Zugfestigkeiten von qualitativen Crimpverbindungen verstanden. Der Abgleich der bei dem Prüfvorgang erfassten Daten mit den in dem mobilen Handgerät oder der Datenbank der Servereinheit hinterlegten Referenzdaten ermöglicht eine besonders einfache und schnelle Überprüfung der Qualität der Crimpverbindung.

Zur Herstellung einer Crimpverbindung gibt es eine Vielzahl unterschiedlicher Crimpkontakte, die grundsätzlich in offene und geschlossene Crimpkontakte unterschieden werden. Die Wahl des passenden Crimpkontakts für die richtige Kabelstärke wirkt sich erheblich auf die Qualität der Crimpverbindung aus. Beispielsweise kann die Auswahl eines ungeeigneten Crimpkontakts dazu führen, dass dieser auf dem Kabel rutschen und somit die Qualität der Crimpverbindung reduzieren kann. Nach einer vorteilhaften Weiterbildung der Erfindung ist daher vorgesehen, dass das Kabel zur Auswahl eines für die Herstellung der Crimpverbindung geeigneten Crimpkontakts mittels des mobilen Handgeräts identifiziert wird und Informationen zu dem geeigneten Crimpkontakt auf der Anzeigeeinheit des mobilen Handgeräts, in der Regel einem elektronischen Display, dargestellt werden.

Das Kabel wir mittels des mobilen Handgeräts durch einen Nutzer identifiziert. Anhand des identifizierten Kabels wird mittels des mobilen Handgeräts und/oder der über die Sende- und Empfangseinheit mit dem mobilen Handgerät kommunizierenden Servereinheit der für die Herstellung der Crimpverbindung geeignete Crimpkontakt ausgewählt. Die Informationen zu dem geeigneten Crimpkontakt werden auf der Anzeigeeinheit des mobilen Handgeräts, beispielsweise in Form von schriftlichen, visuellen und/oder audiovisuellen Anweisungen, z.B. als Abbildungen oder Videos angezeigt. Der Nutzer, z.B. ein Werkstattmitarbeiter, wählt den zu den auf dem mobilen Handgerät angezeigten Informationen passenden Crimpkontakt aus und ordnet diesen für die Herstellung der Crimpverbindung mit dem identifizierten Kabel an der Crimpmatrize an. Darauf beginnt der vorstehend beschriebene Crimpvorgang, in dem der Werkstattmitarbeiter das Kabel mit dem Crimpkontakt mittels der handhaltbaren Zug- und Druckvorrichtung formschlüssig verbindet. Die Verwendung eines mobilen Handgeräts ermöglicht eine einfache und zuverlässige Auswahl des geeigneten Crimpkontakts.

Die Identifikation des Kabels kann grundsätzlich in beliebiger Weise erfolgen, wobei der Nutzer beispielsweise das mobile Handgerät dazu verwendet, in einer Datenbank auf der Servereinheit hinterlegte Abbilder verschiedener Kabel, beispielsweise unterschiedlicher Kabelstärken oder Kabelarten, auf der Anzeigeeinheit des mobilen Handgeräts darzustellen und mit dem für die Herstellung der Crimpverbindung vorgesehenen Kabel abzugleichen. Nach einer vorteilhaften Weiterbildung der Erfindung ist jedoch vorgesehen, dass zur Identifikation des Kabels ein elektronisches Abbild des zu identifizierenden Kabels mit einer Kameraeinheit des mobilen Handgeräts erstellt wird und das elektronische Abbild über die Sende- und Empfangseinheit zur Identifikation des Kabels in der Servereinheit durch Abgleich mit in der Datenbank hinterlegten Abbildern zu identifizierender Kabel an eine Auswerteinheit der Servereinheit übermittelt wird. Die zu dem identifizierten Kabel in der Datenbank hinterlegten Informationen werden zur Auswahl des geeigneten Crimpkontakts an das Handgerät übermittelt.

Zur Erstellung des elektronischen Abbildes richtet der Werkstattmitarbeiter das Handgerät mit der Kameraeinheit auf das zu identifizierende Kabel. Nach der Erstellung des elektronischen Abbildes wird dieses über die Sende- und Empfangseinheit an die Servereinheit übertragen. Innerhalb der Servereinheit erfolgt dann durch die Auswerteinheit ein Abgleich des elektronischen Abbildes mit den in der Datenbank der Servereinheit hinterlegten Abbildern, wobei die Daten zu einem übereinstimmenden, in der Datenbank hinterlegten Kabel, z.B. eine Produktbezeichnung des identifizierten Kabels, dann wiederum von der Servereinheit zur Auswahl des geeigneten Crimpkontakts an das mobile Handgerät übertragen werden.

Die Verwendung des mobilen Handgeräts ermöglicht eine einfache und zuverlässige Identifikation von Kabeln. Durch die Verknüpfung der Datenbank mit der zentralen Servereinheit können mittels einer zentralen Aktualisierung der verknüpften Daten dem Nutzer immer aktuelle Informationen bereitgestellt werden. Es ist somit anders als im Falle einer nur lokal auf dem mobilen Handgerät ablaufenden Identifikation nicht erforderlich, die dann auf dem Handgerät hinterlegten Informationen regelmäßig zu aktualisieren.

Die Auswahl des geeigneten Crimpkontakts kann grundsätzlich in beliebiger Weise mittels des mobilen Handgeräts und/oder der Servereinheit erfolgen, wobei ein geeigneter Crimpkontakt beispielsweise durch eine manuelle Eingabe der auf der Anzeigeeinheit dargestellten Produktbezeichnung des identifizierten Kabels und einem Abgleich mit zu diesem Kabel auf dem mobilen Handgerät oder der Servereinheit hinterlegten Informationen ausgewählt wird. Nach einer vorteilhaften Weiterbildung der Erfindung ist vorgesehen, dass die Informationen zu dem für die Herstellung der Crimpverbindung geeigneten Crimpkontakt in der Datenbank hinterlegt sind, anhand des identifizierten Kabels mittels der Auswerteinheit der geeignete Crimpkontakt ausgewählt wird und die Informationen zum Darstellen auf der Anzeigeeinheit an das mobile Handgerät übertragen werden. Bevorzugt sind die Informationen zu der Art eines geeigneten Crimpkontakts, beispielsweise offen oder geschlossen, mit den in der Datenbank hinterlegten elektronischen Abbildern der Kabel verknüpft, sodass nach der Identifizierung des Kabels mittels der Auswerteinheit lediglich die passende Größe des Crimpkontakts für das Kabel ausgewählt wird.

Indem die Informationen für einen geeigneten Crimpkontakt ebenfalls in der Datenbank der Servereinheit hinterlegt sind und vorzugsweise mit den hinterlegten elektronischen Abbildern der Kabel verknüpft sind, wird eine besonders schnelle und zuverlässige Auswahl des geeigneten Crimpkontakts ermöglicht. Die Informationen zu dem geeigneten Crimpkontakt werden nach der Auswahl durch die Auswerteinheit über die Sende- und Empfangseinheit des mobilen Handgeräts erfasst und auf der Anzeigeeinheit für den Nutzer dargestellt, sodass zur Auswahl einer für die Herstellung einer Crimpverbindung mit dem identifizierten Kabel geeigneten Crimpkontakts nur die Erstellung eines elektronischen Abbildes des Kabels mittels des mobilen Handgeräts erforderlich ist.

Die Ausgestaltung der in der Auswerteinheit durchgeführten Identifikation des Kabels kann grundsätzlich in beliebiger Weise erfolgen, wobei verschiedene Verfahren zur Objekterkennung angewendet werden können. Nach einer vorteilhaften Weiterbildung der Erfindung ist vorgesehen, dass zur Identifikation des Kabels in dem mobilen Handgerät oder in der Auswerteinheit durch eine automatische Formerfassung des elektronischen Abbildes der Formtyp des Kabels und/oder mindestens eine Objektkennzeichnung eines an dem zu identifizierenden Kabels angeordneten Kennzeichens ermittelt wird.

Dabei stellt die äußere Form des Kabels den Formtyp dar. Bei der Ermittlung der geometrischen Form des Kabels können bspw. dessen Durchmesser und/oder Länge ermittelt werden. Die ermittelten Objektmerkmale können dann mit den Objektmerkmalen der in der Datenbank hinterlegten elektrischen Abbilder der Kabel abgeglichen werden. Zusätzlich oder alternativ zur Mustererkennung über den Formtyp des Kabels sieht das weitergebildete Verfahren vor, dass bei oder vor der Erstellung des elektronischen Abbildes eine Objektkennzeichnung des zu identifizierenden Kabels ermittelt wird. Bei einer Objektkennzeichnung kann es sich dabei um bestimmte, von der Form unabhängige Merkmale des zu identifizierenden Kabels handeln, bspw. spezielle Markierungen, Einprägungen sowie die farbliche Ausgestaltung, aber auch auf der Oberfläche angebrachte Etiketten oder dergleichen. Ferner ist die Objektkennzeichnung bevorzugt durch eine an dem Kabel angeordnete Codierung gebildet. Hierbei kann es sich neben einem zweidimensionalen Code, wie einem Barcode oder QR-Code, auch um einen dreidimensionalen Code handeln, der vorstehende Erhebungen, bspw. in Form von Punkten oder Stegen aufweist und die besonders vorteilhafterweise mit reflektierenden Beschichtungen versehen sind, sodass eine besonders zuverlässige Erkennung dieser Objektkennzeichnung im Rahmen der Erstellung des elektronischen Abbildes erfolgen kann.

Insbesondere bei einer kombinierten Erfassung des Formtyps und der Objektkennzeichnung kann die Identifikation des zu identifizierenden Kabels im Rahmen der Auswerteinheit durch Abgleich mit den in der Datenbank hinterlegten Kabeln besonders zuverlässig und zügig erfolgen, nachdem eine Fehlerkennung über eine zunehmende Anzahl übereinstimmender Merkmale reduziert werden kann.

Für die Auswahl eines geeigneten Crimpkontakts ist neben der Wahl der passenden Art des Crimpkontakts auch die Wahl der passenden Größe des Crimpkontakts entscheidend. Beispielsweise kann die Größe des Crimpkontakts für eine passende Art durch eine manuelle Messung eines kennzeichnenden Maßes des Kabels, z.B. dessen Durchmesser, und die Eingabe in das mobile Handgerät durch den Nutzer ermittelt werden. Bevorzugt ist jedoch vorgesehen, dass bei der Erstellung des elektronischen Abbildes die Größe des zu identifizierenden Kabels mittels einer Sensoreinheit des mobilen Handgeräts ermittelt wird. Die Sensoreinheit ist zum Beispiel als Abstandssensor oder als Bewegungssensor ausgebildet. Ferner kann die Sensoreinheit als LIDAR ausgebildet sein. Die Größe des zu identifizierenden Kabels kann bei der automatischen Formerfassung auch über mehrere zusammenwirkende Sensoreinheiten des mobilen Handgeräts ermittelt werden. Bei der Erstellung des elektronischen Abbildes wird die Größe des zu identifizierenden Kabels mittels der Sensoreinheit ermittelt und für die Identifikation des Kabels mit dem elektronischen Abbild an die Servereinheit übermittelt. Für die Auswahl des geeigneten Crimpkontakts wird die ermittelte Größe des Kabels bevorzugt in der Auswerteinheit berücksichtigt, sodass Informationen über einen geeigneten Crimpkontakt passender Art und passender Größe für die Darstellung auf der Anzeigeeinheit an das mobile Handgerät übertragen werden. Durch die Größenerkennung des Kabels mittels der Sensoreinheit des mobilen Handgeräts kann das Risiko einer fehlerhaften Auswahl des Crimpkontakts reduziert werden.

Der Abgleich mit den Referenzdaten ist grundsätzlich in beliebiger Weise möglich, wobei beispielsweise für einen bestimmte Crimpverbindung ein oder mehrere Werte für eine Zugfestigkeit einer qualitativen Crimpverbindung hinterlegt sind. Nach einer vorteilhaften Weiterbildung der Erfindung ist weiter vorgesehen, dass als Referenzdaten in der Datenbank der Servereinheit ein Wertekorridor hinterlegt ist, die erfassten Zugkräfte in der Auswerteinheit mit dem Wertekorridor verglichen werden und bei einem Abweichen der erfassten Zugkräfte von dem Wertekorridor auf der Anzeigeeinheit des mobilen Handgeräts eine Fehlermeldung angezeigt wird. Unter einem Wertekorridor wird ein durch einen unteren und einen oberen Grenzwert aufgespannter Wertbereich verstanden. Die während der Prüfdauer erfassten Zugkräfte und/oder die ermittelte Zugfestigkeit werden von der Auswerteinheit mit dem Wertekorridor verglichen. Sobald die erfassten Zugkräfte und/oder die Zugfestigkeit der Crimpverbindung den unteren Grenzwert unterschreitet oder den oberen Grenzwert überschreitet, wird diese Information von der Sende- und Empfangseinheit des mobilen Handgeräts erfasst und auf der Anzeigeeinheit dargestellt. Durch den Abgleich der erfassten Zugkräfte und/oder der ermittelten Zugfestigkeit mit den in der Datenbank der Servereinheit als Wertekorridor hinterlegten Referenzdaten wird auf vorteilhafte Weise eine besonders schnelle und zuverlässige sowie für einen Nutzer einfach durchzuführende Überprüfung der Qualität der Crimpverbindung ermöglicht.

Nach einer vorteilhaften Weiterbildung der Erfindung ist vorgesehen, dass in der Datenbank der Servereinheit oder auf dem mobilen Handgerät Informationen zu Crimpstempeln, Crimpmatrizen, Crimphaltern und/oder Kabelhaltern hinterlegt sind, mittels des identifizierten Kabels für die Herstellung und/oder Überprüfung der Crimpverbindung ein geeigneter Crimpstempel und eine geeignete Crimpmatrize und/oder ein geeigneter Crimphalter und ein geeigneter Kabelhalter ausgewählt und die hierzu hinterlegten Informationen auf der Anzeigeeinheit des mobilen Handgeräts angezeigt werden. Die Informationen zu Crimpstempeln und Crimpmatrizen sind bevorzugt mit den in der Datenbank hinterlegten Abbildern zu den Kabeln verknüpft, sodass bei der Auswahl eines für ein identifiziertes Kabel geeigneten Crimpkontaktes zusätzlich ein geeigneter Crimpstempel und eine geeignete Crimpmatrize für die Herstellung der Crimpverbindung mittels der handhaltbaren Zug- und Druckvorrichtung ausgewählt werden. Die zu dem geeigneten Crimpstempel und der geeigneten Crimpmatrize hinterlegten Informationen werden auf der Anzeigeeinheit des mobilen Handgeräts angezeigt.

Ferner sind die Informationen zu den Crimphaltern und Kabelhaltern bevorzugt mit den in der Datenbank hinterlegten Abbildern zu den Kabeln verknüpft. Alternativ oder zusätzlich sind die Informationen zu den Crimphaltern und Kabelhaltern mit in der Datenbank hinterlegten Abbildern zu Crimpverbindungen verknüpft. In diesem Fall wird die Crimpverbindung vor dem Anordnen des Crimphalters und des Kabelhalters bevorzugt mittels des mobilen Handgeräts durch den Nutzer wie vorstehend zu dem Kabel beschrieben, identifiziert. Anhand des elektronischen Abbildes der Crimpverbindung werden daraufhin der geeignete Crimphalter und der geeignete Kabelhalter analog zu der Auswahl des geeigneten Crimpkontaktes ausgewählt und die hierzu hinterlegten Informationen auf der Anzeigeeinheit des mobilen Handgeräts angezeigt.

Anschließend werden der geeignete Crimpstempel und die geeignete Crimpmatrize für die Herstellung der Crimpverbindung oder der geeignete Crimphalter und der geeignete Kabelhalter für die Überprüfung der Crimpverbindung durch einen Nutzer an der handhaltbaren Zug- und Druckvorrichtung angeordnet. Daraufhin beginnt der Crimp- oder Prüfvorgang. Dadurch dass neben dem Crimpkontakt auch der Crimpstempel und die Crimpmatrize sowie der Crimphalter und der Kabelhalter mittels des mobilen Handgeräts identifiziert und dem Nutzer auf der Anzeigeeinheit die Informationen hierzu angezeigt werden, kann auf vorteilhafte Weise durch falsche Werkzeuge bedingten Qualitätseinbußen der Crimpverbindung sowie Fehlmessungen bei der Überprüfung der Qualität der Crimpverbindung entgegengewirkt werden.

Der Prüfvorgang und/oder der Crimpvorgang kann beispielsweise mittels der an der handhaltbaren Zug- und Druckvorrichtung angeordneten und mit der Antriebseinheit verbundenen Steuereinheit gesteuert werden. Hierzu ist die Steuereinheit vorzugsweise zur Steuerung des Prüf- und Crimpvorgangs und/oder zur Archivierung der Prüf- und Crimpvorgänge ausgebildet. So lassen sich über die Steuereinheit bspw. die jeweils vorgesehenen Zug- oder Druckkräfte in besonders einfacher Weise einstellen, sodass die Prüf- und Crimpvorgänge besonders zuverlässig ausgeführt werden können. Die Steuereinheit kann auch dazu vorgesehen sein, die durchgeführten Prüf- und Crimpvorgänge zu archivieren, sodass eine Protokollierung der durchgeführten Arbeiten zuverlässig erfolgen kann.

Nach einer vorteilhaften Weiterbildung der Erfindung ist weiter vorgesehen, dass die handhaltbare Zug- und Druckvorrichtung zur Überprüfung und/oder Herstellung der Crimpverbindung mittels der Steuereinheit gesteuert wird, wobei die Steuereinheit über die Kommunikationseinheit der handhaltbaren Zug- und Druckvorrichtung ein in der Datenbank der Servereinheit oder auf dem mobilen Handgerät für die Werkzeuge, d.h. den Crimpstempel und die Crimpmatrize oder den Crimphalter und den Kabelhalter hinterlegtes Programm über das mobile Handgerät abruft.

Bevorzugt ist das Programm in der Servereinheit hinterlegt und mit den elektronischen Abbildern der Kabel und/ oder der Crimpverbindung und/oder den Informationen zu den geeigneten Werkzeugen verknüpft. Das in der Servereinheit hinterlegte Programm wird besonders bevorzugt mit den Informationen zu dem identifizierten Kabel und /oder der identifizierten Crimpverbindung und/oder den Informationen zu den geeigneten Werkzeugen auf das mobile Handgerät und/oder die Kommunikationseinheit der handhaltbaren Zug- und Druckvorrichtung übertragen. Zum Steuern des Prüf- oder Crimpvorgangs wird das Programm beispielsweise auf dem mobilen Handgerät durchgeführt, sodass der jeweilige Vorgang über eine dauerhafte Verbindung des mobilen Handgeräts mit der Kommunikationseinheit und der Steuereinheit gesteuert wird. Bevorzugt weist die Kommunikationseinheit einen ausreichenden Speicher für mindestens ein, bevorzugt mehrere Programme auf, sodass ein für geeignete Werkzeuge hinterlegtes Programm vor dem Beginn des Bearbeitungsvorgangs direkt von der Servereinheit oder mittelbar über das mobile Handgerät an den Speicher der Kommunikationseinheit übertragen und zumindest für den Ablauf des Programms in diesem gespeichert wird. Hierdurch kann Fehlern durch Verbindungsabbrüche entgegengewirkt werden. Besonders bevorzugt kann das von der Servereinheit an das mobile Handgerät übermittelte Programm vor der Übermittlung an die Kommunikationseinheit von dem Nutzer angepasst werden, sodass beispielsweise ein von einem Crimpprogramm abweichendes Drehmoment für den Elektromotor eingestellt oder eine alternative Druck-Ist-Kraft definiert sowie für ein Prüfprogramm die Prüfdauer eingestellt werden kann.

Mit den in der Datenbank für verschiedene Werkzeuge hinterlegten Programmen kann automatisch für die geeigneten Werkzeuge das passende Prüf- und/oder Crimpprogramm an das mobile Handgerät und/oder die Kommunikationseinheit der handhaltbaren Zug- und Druckvorrichtung übertragen werden. Die manuelle Einstellungsmöglichkeit des übertragenen Programms auf dem mobilen Handgerät ermöglicht dem Nutzer individuelle Änderungen.

Das System zur Durchführung eines Verfahrens zur Herstellung und/oder Überprüfung der Qualität einer Crimpverbindung weist neben der vorstehend beschriebenen handhaltbaren Zug- und Druckvorrichtung ein mobiles Handgerät mit einer Kameraeinheit, einer Anzeigeeinheit und einer Sende- und Empfangseinheit zur drahtlosen Datenübertragung von Informationen an eine Servereinheit auf. Weiter weist das System mindestens einen an der Stempelaufnahme anordbaren Crimpstempel zum Umformen eines Crimpkontakts sowie mindestens eine an der Matrizenaufnahme anordbare Crimpmatrize zur Aufnahme eines Kabels bei der Herstellung der Crimpverbindung auf. Ferner weist das System mindestens einen an der Stempelaufnahme anordbaren Crimphalter zum Festhalten, d.h. bevorzugt ortsfest Positionieren, eines Crimpkontakts sowie mindestens einen an der Matrizenaufnahme anordbaren Kabelhalter zum Festhalten eines Kabels bei der Überprüfung der Crimpverbindung auf.

Der Gewindetrieb der handhaltbaren Zug- und Druckvorrichtung weist bevorzugt eine mit dem Elektromotor verbundene, verdrehbar an einem Gehäusekörper gelagerte Gewindespindel und eine verdrehbar auf der Gewindespindel und über eine Lagereinheit verdrehfest an dem Gehäusekörper gelagerte Gewindemutter auf. Die Kopplungseinheit ist derart mit der Gewindemutter verbunden, dass sowohl Zug- als auch Druckkräfte, welche aus der Bewegungsrichtung der Gewindespindel und der sich daraus ergebenden linearen Verstellung der Gewindemutter ergeben, zuverlässig von der Gewindemutter über die Kopplungseinheit auf die Werkzeugaufnahme übertragen werden.

Zudem ist das System besonders vorteilhafterweise mit einer Servereinheit verbunden, die
- eine Datenbank mit hinterlegten Abbildern zu den zu identifizierenden Kabeln und/oder Crimpverbindungen, Informationen zu Werkzeugen und Programmen zur Steuerung der handhaltbaren Zug- und Druckvorrichtung und
- eine Auswerteinheit zur Identifikation des Kabels in der Servereinheit durch Abgleich des zu übermittelnden Abbildes mit den in der Datenbank hinterlegten Abbildern sowie zur Auswahl eines geeigneten Crimpkontakts oder geeigneter Werkzeuge
aufweist.

Die handhaltbare Zug- und Druckvorrichtung ermöglicht einem Nutzer, bspw. im Werkstattbetrieb, die einfache und zuverlässige Herstellung und/oder Überprüfung der Qualität einer Crimpverbindung. Zudem gewährleistet das System in Verbindung mit dem mobilen Handgerät eine flexible und mobil durchführbare Auswahl eines für die Herstellung geeigneten Crimpkontakts sowie für den Prüfvorgang und den Crimpvorgang geeigneter Werkzeuge. Die handhaltbare Zug- und Druckvorrichtung sowie das mobile Handgerät zeichnen sich dabei durch ihre hohe Flexibilität und Handhabbarkeit aus.

Besonders bevorzugt weist das System eine Mehrzahl an Crimpstempeln und Crimpmatrizen und/oder eine Mehrzahl an Crimphaltern und Kabelhaltern mit auswechselbaren Einsätzen für verschiedene Kabel und/oder Crimpkontakts auf. Die Einsätze weisen beispielsweise unterschiedliche Bauteilaufnahmen, insbesondere Crimp- oder Kabelaufnahmen auf. Eine Bauteilaufnahme ist ein freier Bereich des Einsatzes zur Anordnung des Crimpkontakts und des Kabels der mit der Zug- und Druckvorrichtung zu überprüfenden und/oder herzustellenden Crimpverbindung. Beispielsweise unterscheiden sich die Bauteilaufnahmen in Art und Größe durch unterschiedliche Geometrien, z.B. eine zylinderförmige Geometrie zur Aufnahme eines Kabels. An der Crimpmatrize sind beispielweise unterschiedliche Einsätze für gängige Kabeldurchmesser anordbar. Zusätzlich ist die Crimpmatrize vorzugsweise mit verschiedenen Crimpstempeln zur Herstellung unterschiedlicher Crimpverbindungen, beispielsweise einer C-Crimpverbindung oder einer F-Crimpverbindung kombinierbar.

Die Mehrzahl an verschiedenen Crimpstempeln und Crimpmatrizen und/oder an Crimphaltern und Kabelhaltern ermöglicht einen breiten Anwendungsbereich für die handhaltbare Zug- und Druckvorrichtung. Die Einsätze gewährleisten durch die breite Abdeckung unterschiedlicher Geometrien verschiedener oder typgleicher Kabel und/oder Crimpverbindungen für die Herstellung und/oder Überprüfung verschiedener Crimpverbindungen die Verwendung geeigneter Werkzeuge.

Das Handgerät des Systems ist bevorzugt zur manuellen Eingabe von Informationen ausgebildet. Dies ermöglicht bspw. dem Nutzer das Prüf- oder Crimpprogramm individuell anzupassen.

Besonders bevorzugt ist das mobile Handgerät durch ein Tablet oder ein Smartphone gebildet. Die Verwendung eines Smartphones zeichnet sich dabei dadurch aus, dass diese in der Regel bereits eine Anzeigeeinheit, eine Kameraeinheit sowie einen Bewegungssensor oder einen Abstandssensor aufweisen, sodass die Erstellung des elektronischen Abbildes mit der Größenerkennung des Kabels und/oder der Crimpverbindung dann unter Verwendung einer auf dem Mobilgerät ablaufenden Programmapplikation (App) erfolgen kann. Während der Erstellung des elektronischen Abbildes können bspw. auf der Anzeigeeinheit des mobilen Gerätes durch die App Rahmenlinien oder Anwendungshinweise eingeblendet werden.

Ein Ausführungsbeispiel der Erfindung ist nachstehend mit Bezug auf die Zeichnungen erläutert. In den Zeichnungen zeigen:
- Fig.1: eine schematische Darstellung eines Systems zur Durchführung eines Verfahrens zur Herstellung und Überprüfung der Qualität einer Crimpverbindung mittels einer einen Crimpstempel und eine Crimpmatrize aufweisenden handhaltbaren Zug- und Druckvorrichtung und
- Fig.2: eine schematische Darstellung des Systems von Fig.1 mit der anstelle des Crimpstempels einen Crimphalter sowie anstelle der Crimpmatrize einen Kabelhalter aufweisenden handhaltbaren Zug- und Druckvorrichtung.

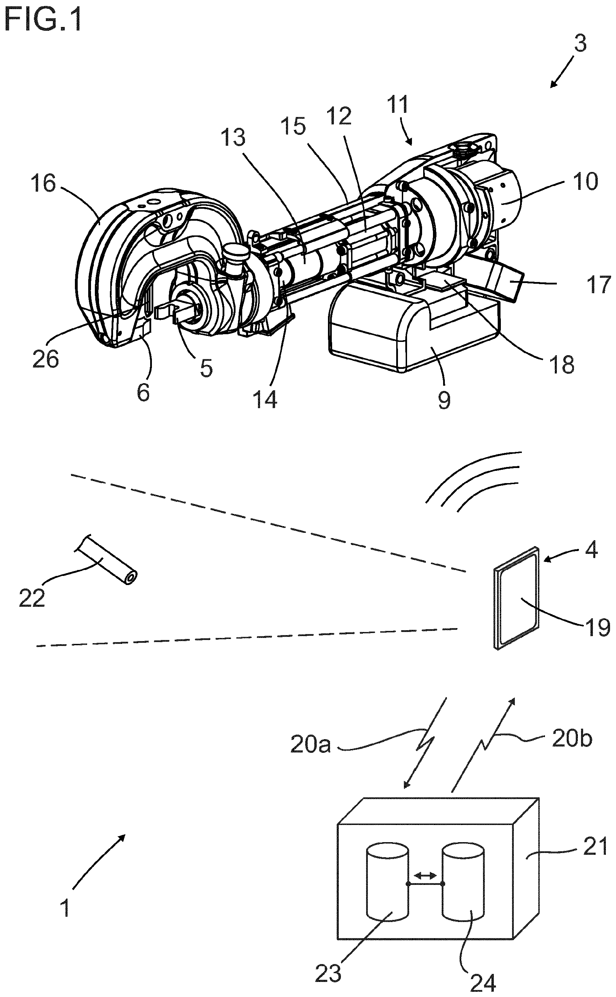

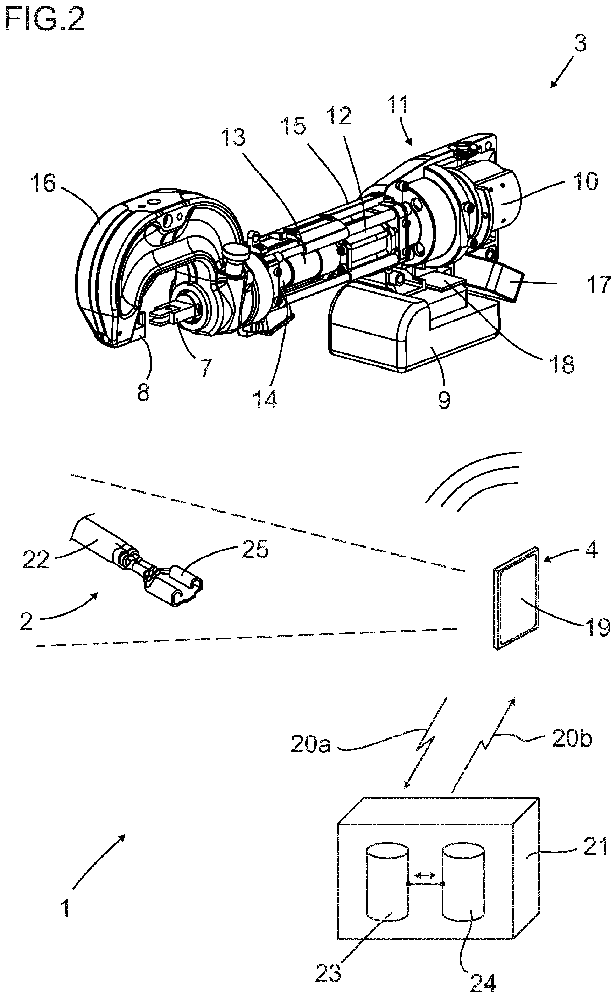

Ein System 1 zur Durchführung eines Verfahrens zur Herstellung und Überprüfung der Qualität einer Crimpverbindung 2 mittels einer handhaltbaren Zug- und Druckvorrichtung 3 ist in Fig. 1 und Fig. 2 schematisch dargestellt. Das System 1 weist neben der handhaltbaren Zug- und Druckvorrichtung 3 ein als Smartphone 4 ausgebildetes mobiles Handgerät und eine Mehrzahl an Crimpstempeln 5, -matrizen 6, -haltern 7 sowie Kabelhaltern 8 auf. In Fig.1 sind exemplarisch ein Crimpstempel 5 und eine Crimpmatrize 6 und in Fig.2 ein Crimphalter 7 und ein Kabelhalter 8 dargestellt.

Die handhaltbare Zug- und Druckvorrichtung 3 weist eine einen durch einen Akku 9 betriebenen Elektromotor 10 aufweisende Antriebseinheit 11 und einen mit dem Elektromotor 10 verbundenen Gewindetrieb 12 zum Übertragen von aus der Drehrichtung des Elektromotors 10 resultierenden Zug- und Druckkräften auf eine Kopplungseinheit 13 auf. Ferner weist die Zug- und Druckvorrichtung 3 eine mit der Kopplungseinheit 13 verbundene Stempelaufnahme 14 und eine an einem Gehäusekörper 15 angeordnete Matrizenaufnahme 16 auf. Über die Kopplungseinheit 13 sind die Zug- und Druckkräfte auf die Stempelaufnahme 14 übertragbar.

An der handhaltbaren Zug- und Druckvorrichtung 3 sind weiter eine Steuereinheit 17 und eine mit der Steuereinheit 17 verbundene als Kraftsensor ausgebildete Sensoreinheit zur Erfassung der Zug- und Druckkräfte der Stempelaufnahme 14 angeordnet. Die Steuereinheit 17 ist mit einer Kommunikationseinheit 18 zum Datenaustausch mit dem Smartphone 4 verbunden.

Das Smartphone 4 weist eine Anzeigeeinheit in Form eines elektronischen Displays 19 zum Darstellen von Informationen und eine Sende- und Empfangseinheit zur drahtlosen Datenübertragung 20a, 20b von Informationen an eine Servereinheit 21 auf. Darüber hinaus weist das Smartphone 4 eine Kameraeinheit zur Erstellung eines elektronischen Abbildes eines zu identifizierenden Kabels 22 oder der Crimpverbindung 2 sowie einen Abstandssensor zum Ermitteln der Größe des Kabels 22 der Crimpverbindung 2 oder der Crimpverbindung 2 bei der Erstellung des elektronischen Abbildes auf.

Die Servereinheit 21 weist eine Datenbank 23 mit hinterlegten Abbildern zu Kabeln 22, Crimpverbindungen 2, Informationen zu Crimpstempeln 5, -matrizen 6, -haltern 7 und Kabelhaltern 8 sowie Crimp- und Prüfprogrammen zur Steuerung der handhaltbaren Zug- und Druckvorrichtung 2 auf. Weiter weist die Servereinheit 21 eine Auswerteinheit 24 zur Identifikation des Kabels 22 oder der Crimpverbindung 2 in der Servereinheit 18 auf.

Zur Herstellung der Crimpverbindung 2 mittels der handhaltbaren Zug- und Druckvorrichtung 3 wird zunächst das Kabel 22 mittels des Smartphones 4 identifiziert. Hierzu erstellt ein Nutzer mit der Kameraeinheit des Smartphones 4 ein elektronisches Abbild des Kabels 22. Durch den Abstandssensor des Smartphones 4 wird bei der Erstellung des elektronischen Abbildes die Größe des Kabels 2 ermittelt.

Das in dem Smartphone 4 erstellte elektronische Abbild wird über eine drahtlose Verbindung, bspw. eine Mobilfunkverbindung mit der ermittelten Größe des Kabels 22 an die Servereinheit 21 übertragen, wobei die Datenübertragung von dem Smartphone 4 zur Servereinheit und umgekehrt erfolgen kann. Innerhalb der Servereinheit 21 wird das elektronische Abbild innerhalb der Auswerteinheit 24 analysiert und beispielsweise im Rahmen einer Formerfassung, vorliegend der Kantenform des Kabels 22 mit den in der Datenbank 23 hinterlegten elektronischen Abbildern von Kabeln 22 abgeglichen.

Informationen zu für die Herstellung einer Crimpverbindung 2 mit unterschiedlichen Kabeln 22 geeigneten Crimpkontakten 25 sind mit den in der Datenbank 23 hinterlegten elektronischen Abbildern der Kabel 22 verknüpft, sodass nach der Identifizierung des Kabels 22 mittels der Auswerteinheit 24 anhand der ermittelten Größe des Kabels 22 die passende Größe des Crimpkontakts 25 ermittelt wird. Zusätzlich sind in der Datenbank 23 jeweils Informationen zu für die Bearbeitung geeigneten Crimpstempeln 5 und Crimpmatrizen 6 hinterlegt und ebenfalls mit den hinterlegten elektronischen Abbildern verknüpft, sodass für das identifizierte Kabel 22 und den ausgewählten Crimpkontakt 25 ein geeigneter Crimpstempel 5 und eine geeignete Crimpmatrize 6 von der Auswerteinheit 24 ausgewählt werden. Zusätzlich ist zu dem ausgewählten Crimpstempel 5 und der ausgewählten Crimpmatrize 6 ein Crimpprogramm zur Steuerung der handhaltbaren Zug- und Druckvorrichtung 2 hinterlegt. Das Crimpprogramm wird hierzu über die Sende- und Empfangseinheit des Smartphones 4 zusammen mit den Informationen zu dem identifizierten Kabel 22, dem für die Herstellung der Crimpverbindung 2 mit dem Kabel 22 geeigneten Crimpkontakt 25 und die Informationen für den geeigneten Crimpstempel 5 und die geeignete Crimpmatrize 6 von der Servereinheit 21 abgerufen. Das Crimpprogramm wird an die mit der Steuereinheit 17 verbundene Kommunikationseinheit 18 weitergeleitet und die vorstehend genannten Informationen werden auf dem elektronischen Display 19 des Smartphones 4 angezeigt.

Durch den Nutzer, z.B. einen Werkstattmitarbeiter werden der Crimpstempel 5 und die Crimpmatrize 6, die zu den auf dem Smartphone 4 angezeigten Informationen passend sind, an der Stempelaufnahme 14 und der Matrizenaufnahme 16 angeordnet. Das Kabel 22 wird manuell durch den Nutzer mittels einer Abisolierzange abisoliert. Der zu den Informationen auf dem Smartphone 4 passende Crimpkontakt 25 wird von dem Nutzer an der Crimpmatrize 6 angeordnet und die freigelegte Litze wird von dem Nutzer an dem Crimpkontakt an einem an der Matrizenaufnahme 16 angeordneten Positionierelement 26 positioniert.

Sobald der Crimpkontakt 25 und das Kabel 22 mit der Litze an der Crimpmatrize 6 angeordnet sind, wird der Crimpvorgang gestartet. Die Steuereinheit 17 steuert den Crimpvorgang durch Ausführen des von der Servereinheit 21 abgerufenen Crimpprogramms in Abhängigkeit von den Signalen des Kraftsensors. Durch den Gewindetrieb 12 wird das Drehmoment des Elektromotors 10 in eine Druckkraft umgewandelt und über die Kopplungseinheit 13 an den Crimpstempel 5 übertragen. Dabei wird der Crimpstempel 5 in Längsachsenrichtung der Stempelaufnahme 14 in Richtung auf die Crimpmatrize 6 verstellt. Die Druckkraft wird über den Crimpstempel 5 auf den Crimpkontakt 25 übertragen und der Crimpkontakt 25 mittels des Crimpstempels 5 zumindest abschnittsweise plastisch verformt. Hierdurch wird eine feste und gasdichte Crimpverbindung 2 zwischen dem Crimpkontakt 25 und dem Kabel 22 hergestellt.

Für die Überprüfung der Qualität der mittels der handhaltbaren Zug- und Druckvorrichtung 3 hergestellten Crimpverbindung 2 wird anschließend, wie in Fig.2 dargestellt, der Crimphalter 7 anstelle des Crimpstempels 5 in der Stempelaufnahme 14 und der Kabelhalter 8 anstelle der Crimpmatrize 6 in der Matrizenaufnahme 16 angeordnet. Zur Auswahl eines geeigneten Crimphalters 7 und eines geeigneten Kabelhalters 8 sind die in der Datenbank Informationen zu verschiedenen Crimphaltern 7 und Kabelhaltern 8 hinterlegt und mit den elektronischen Abbildern der Kabel 22 verknüpft. Die Informationen zu einem geeigneten Crimphalter 7 und einem geeigneten Kabelhalter 8 für die Überprüfung der Crimpverbindung 2 werden ebenfalls an das Smartphone 4 übertragen und zur Einsicht des Nutzers auf dem elektronischen Display 19 angezeigt. Zusätzlich wird ein passendes Prüfprogramm über die Sende- und Empfangseinheit des Smartphones 4 von der Servereinheit 21 abgerufen. Das Prüfprogramm wird an die mit der Steuereinheit 21 verbundene Kommunikationseinheit 18 weitergeleitet.

Das Kabel 22 der Crimpverbindung 2 wird an dem Kabelhalter 8 und der Crimpkontakt 25 der Crimpverbindung 2 wird an dem Crimphalter 7 befestigt.

Zur Einleitung des Prüfvorgangs initialisiert und steuert die Steuereinheit 17 den Prüfvorgang durch Ausführen des von der Servereinheit 21 abgerufenen Prüfprogramms. Das Drehmoment des Elektromotors 10 wird durch den Gewindetrieb 12 in eine Zugkraft umgewandelt und über die Kopplungseinheit 13 von dem Gewindetrieb 12 auf den Crimphalter 7 und den Crimpkontakt 25 übertragen. Die auf den Crimphalter 7 und die Crimpverbindung 2 wirkende Zugkraft wird mittels der Sensoreinheit über den gesamten Prüfvorgang erfasst. Die ermittelten Daten, d.h. die erfassten Zugkräfte werden von der Kommunikationseinheit 18 über das Smartphone 4 an die Servereinheit 21 übertragen. In der Auswerteinheit 24 der Servereinheit 21 werden die ermittelten Daten mit Referenzdaten in Form eines Wertekorridors abgeglichen. Sobald die ermittelten Daten von dem Wertekorridor abweichen, wird auf dem elektronischen Display 19 des Smartphones 4 eine visuelle oder audiovisuelle Fehlermeldung wiedergegeben. Für den Fall, dass die ermittelten Daten über den gesamten Prüfvorgang nicht von dem Wertekorridor abweichen, wird eine entsprechende Information zur Bestätigung der ausreichenden Qualität der Crimpverbindung 2 auf dem elektronischen Display 19 wiedergegeben. Durch die Erfassung der Zugkraft während des Prüfvorgangs wird die Zugfestigkeit der Crimpverbindung 2 in der Auswerteinheit 24 der Servereinheit 21 ermittelt und dem Nutzer ebenfalls auf dem elektronischen Display 19 angezeigt.

Das Verfahren zur Überprüfung der Qualität der Crimpverbindung 2 mittels der zur Herstellung der Crimpverbindung 2 geeigneten, handhaltbaren Zug- und Druckvorrichtung 3 und das System 1 mit der handhaltbaren Zug- und Druckvorrichtung 3 sowie dem Smartphone 4 ermöglicht eine einfache und zuverlässige Qualitätsüberprüfung von Crimpverbindungen 2 vor Ort, beispielsweise in einem Werkstattbetrieb. Alle in Verbindung mit einzelnen Ausführungsformen der Erfindung erläuterten Merkmale können in unterschiedlicher Kombination für das Verfahren zur Herstellung und Überprüfung der Qualität einer Crimpverbindung 2 und/oder das System 1 zur Durchführung des Verfahrens vorgesehen sein, um deren vorteilhafte Wirkungen zu realisieren, auch wenn diese zu unterschiedlichen Ausführungsformen beschrieben worden sind. Beispielsweise kann die handhaltbare Zug- und Druckvorrichtung 2 ausschließlich über das Smartphone 4 gesteuert werden, wobei die Steuereinheit 17 lediglich das über die Kommunikationseinheit 18 von der Sende- und Empfangseinheit erfasste Prüf- oder Crimpprogramme durchführt.

Der Schutzbereich der vorliegenden Erfindung ist durch die Ansprüche gegeben und wird durch die in der Beschreibung erläuterten oder in den Figuren gezeigten Merkmale nicht beschränkt.

### Bezugszeichenliste

- 1: System
- 2: Crimpverbindung
- 3: handhaltbare Zug- und Druckvorrichtung
- 4: mobiles Handgerät/Smartphone
- 5: Crimpstempel
- 6: Crimpmatrize
- 7: Crimphalter
- 8: Kabelhalter
- 9: Akku
- 10: Elektromotor
- 11: Antriebseinheit
- 12: Gewindetrieb
- 13: Kopplungseinheit
- 14: Stempelaufnahme
- 15: Gehäusekörper
- 16: Matrizenaufnahme
- 17: Steuereinheit
- 18: Kommunikationseinheit
- 19: Anzeigeeinheit/elektronisches Display
- 20a,20b: drahtlose Datenübertragung
- 21: Servereinheit
- 22: Kabel
- 23: Datenbank
- 24: Auswerteinheit
- 25: Crimpkontakt
- 26: Positionierelement

## Patentansprüche

1. Verfahren zur Überprüfung der Qualität einer Crimpverbindung mittels einer zur Herstellung der Crimpverbindung geeigneten, handhaltbaren Zug- und Druckvorrichtung mit
- einer einen akkubetriebenen Elektromotor (10) aufweisenden Antriebseinheit (11),
- einem mit dem Elektromotor (10) verbundenen und in einem Gehäusekörper (15) angeordneten Gewindetrieb (12) zum Übertragen von aus der Drehrichtung des Elektromotors (10) resultierenden Zug- und Druckkräften auf eine Kopplungseinheit (13),
- einer mit der Kopplungseinheit (13) verbundenen Stempelaufnahme (14),
- einer an dem Gehäusekörper (15) angeordneten Matrizenaufnahme (16) und
- einer Sensoreinheit zur Erfassung der Zug- und Druckkräfte und/oder des Verstellwegs der Stempelaufnahme (14),
mit den Schritten
- Anordnen eines Crimphalters (7) an der Stempelaufnahme (14) zur Festlegung eines Crimpkontakts (25) einer Crimpverbindung (2);
- Anordnen eines Kabelhalters (8) an der Matrizenaufnahme (16) zur Festlegung eines Kabels (22) der Crimpverbindung (2);
- Übertragen einer von dem Gewindetrieb (12) über die Kopplungseinheit (13) durch den Crimphalter (7) auf den Crimpkontakt (25) übertragenen Zugkraft auf die Crimpverbindung (2);
- Ermitteln der Zugfestigkeit der Crimpverbindung (2) durch Erfassung der Zugkraft des Crimphalters (7) und/oder Erfassung des Verstellwegs des Crimphalters (7) mittels der Sensoreinheit.

2. Verfahren nach Anspruch 1, **dadurch gekennzeichnet, dass** eine zuvor mittels der handhaltbaren Zug- und Druckvorrichtung (3) hergestellte Crimpverbindung (2) überprüft wird, wobei zur Überprüfung der Crimpverbindung (2) der Crimphalter (7) anstelle eines Crimpstempels (5) in der Stempelaufnahme (14) angeordnet wird und der Kabelhalter (8) anstelle einer Crimpmatrize (6) in der Matrizenaufnahme (16) angeordnet wird.

3. Verfahren nach einem oder mehrerer der vorhergehenden Ansprüche, **dadurch gekennzeichnet, dass** die Zugfestigkeit mittels einer mit der Sensoreinheit verbundenen Steuereinheit (17) und/oder mittels eines über eine Sende- und Empfangseinheit mit einer Kommunikationseinheit (18) der handhaltbaren Zug- und Druckvorrichtung (3) verbunden mobilen Handgeräts (4) und/oder einer über eine drahtlose Verbindung mit der handhaltbaren Zug- und Druckvorrichtung (3) oder dem mobilen Handgerät (4) verbundenen Servereinheit (21) ermittelt wird.

4. Verfahren nach einem oder mehrerer der vorhergehenden Ansprüche, **dadurch gekennzeichnet, dass** die Zugkraft und/oder der Verstellweg über eine definierbare Prüfdauer erfasst wird und die erfassten Daten zur Überprüfung der Qualität der Crimpverbindung (2) mit in dem mobilen Handgerät (4) oder in einer Datenbank (23) der Servereinheit (21) hinterlegten Referenzdaten abgeglichen werden.

5. Verfahren nach einem oder mehrerer der vorhergehenden Ansprüche, **dadurch gekennzeichnet, dass** das Kabel (22) zur Auswahl eines für die Herstellung der Crimpverbindung (2) geeigneten Crimpkontakts (25) mittels des mobilen Handgeräts (4) identifiziert wird und Informationen zu dem geeigneten Crimpkontakt (25) auf einer Anzeigeeinheit (19) des mobilen Handgeräts (4) dargestellt werden.

6. Verfahren nach einem oder mehrerer der vorhergehenden Ansprüche, **dadurch gekennzeichnet, dass** zur Identifikation des Kabels (22)
- ein elektronisches Abbild des zu identifizierenden Kabels (22) mit einer Kameraeinheit des mobilen Handgeräts (4) erstellt wird,
- das elektronische Abbild über die Sende- und Empfangseinheit zur Identifikation des Kabels (22) in der Servereinheit (21) durch Abgleich mit in der Datenbank (23) hinterlegten Abbildern zu identifizierender Kabel (22) an eine Auswerteinheit (24) der Servereinheit (21) übermittelt wird und
- die zu dem identifizierten Kabel (22) in der Datenbank (23) hinterlegten Informationen zur Auswahl des geeigneten Crimpkontakts (25) an das Handgerät (4) übermittelt werden.

7. Verfahren nach einem oder mehrerer der vorhergehenden Ansprüche, **dadurch gekennzeichnet, dass** die Informationen zu dem für die Herstellung der Crimpverbindung (2) geeigneten Crimpkontakt (25) in der Datenbank hinterlegt sind, anhand des identifizierten Kabels (22) mittels der Auswerteinheit (24) der geeignete Crimpkontakt (25) ausgewählt wird und die Informationen zum Darstellen auf der Anzeigeeinheit (19) an das mobile Handgerät (4) übertragen werden.

8. Verfahren nach einem oder mehrerer der vorhergehenden Ansprüche, **dadurch gekennzeichnet, dass** zur Identifikation des Kabels (22) in dem mobilen Handgerät (4) oder in der Auswerteinheit (24) durch eine automatische Formerfassung des elektronischen Abbildes der Formtyp des Kabels (22) und/oder mindestens eine Objektkennzeichnung eines an dem zu identifizierenden Kabels (22) angeordneten Kennzeichens ermittelt wird.

9. Verfahren nach einem oder mehrerer der vorhergehenden Ansprüche, **dadurch gekennzeichnet, dass** als Referenzdaten in der Datenbank (23) der Servereinheit (21) ein Wertekorridor hinterlegt ist, die erfassten Zugkräfte und/oder der Verstellweg in der Auswerteinheit (24) mit dem Wertekorridor verglichen werden und bei einem Abweichen der erfassten Zugkräfte und/oder des Verstellwegs von dem Wertekorridor auf der Anzeigeeinheit (19) des mobilen Handgeräts (4) eine Fehlermeldung angezeigt wird.

10. Verfahren nach einem oder mehrerer der vorhergehenden Ansprüche, **dadurch gekennzeichnet, dass** in der Datenbank (23) der Servereinheit (21) oder auf dem mobilen Handgerät (4) Informationen zu Crimpstempeln (5), Crimpmatrizen (6), Crimphaltern (7) und/oder Kabelhaltern (8) hinterlegt sind, mittels des identifizierten Kabels (22) für die Herstellung und/oder Überprüfung der Crimpverbindung (2) ein geeigneter Crimpstempel (5) und eine geeignete Crimpmatrize (6) und/oder ein geeigneter Crimphalter (7) und ein geeigneter Kabelhalter (8) ausgewählt werden und die hierzu hinterlegten Informationen auf der Anzeigeeinheit (19) des mobilen Handgeräts (4) angezeigt werden.

11. Handhaltbare Zug- und Druckvorrichtung zur Durchführung eines Verfahrens zur Überprüfung der Qualität einer Crimpverbindung, insbesondere nach einem der Ansprüche 1- 10, mit
- einer einen akkubetriebenen Elektromotor (10) aufweisenden Antriebseinheit (11),
- einem mit dem Elektromotor (10) verbundenen und in einem Gehäusekörper (15) angeordneten Gewindetrieb (12) zum Übertragen von aus der Drehrichtung des Elektromotors (10) resultierenden Zug- und Druckkräften auf eine Kopplungseinheit (13),
- einer mit der Kopplungseinheit (13) verbundenen Stempelaufnahme (14),
- einer an dem Gehäusekörper (15) angeordnete Matrizenaufnahme (16) und
- eine Sensoreinheit zur Erfassung der Zug- und Druckkräfte und/oder des Verstellwegs der Stempelaufnahme (14).

12. System zur Durchführung eines Verfahrens zur Herstellung und/oder Überprüfung der Qualität einer Crimpverbindung, mit
- einer handhaltbaren Zug- und Druckvorrichtung (3) nach Anspruch 11,
- einem mobilen Handgerät (4) mit einer Kameraeinheit, einer Anzeigeeinheit (19) und einer Sende- und Empfangseinheit zur drahtlosen Datenübertragung von Informationen an eine Servereinheit (21), und
- mindestens einem an der Stempelaufnahme (14) der handhaltbaren Zug- und Druckvorrichtung (3) anordbaren Crimpstempel (5) zum Umformen eines Crimpkontakts (25) bei der Herstellung der Crimpverbindung (2),
- mindestens einer an der Matrizenaufnahme (16) der handhaltbaren Zug- und Druckvorrichtung (2) anordbaren Crimpmatrize (6) zur Aufnahme eines Kabels (22) bei der Herstellung der Crimpverbindung (2),
- mindestens einem an der Stempelaufnahme (14) anordbaren Crimphalter (7) zum Festhalten eines Crimpkontakts (25) bei der Überprüfung der Crimpverbindung (2),
- mindestens einem an der Matrizenaufnahme (16) anordbaren Kabelhalter (8) zum Festhalten eines Kabels (22) bei der Überprüfung der Crimpverbindung (2).

13. System nach Anspruch 12, **gekennzeichnet, durch** eine Mehrzahl an Crimpstempeln (5) und Crimpmatrizen (6) und/oder eine Mehrzahl an Crimphaltern (7) und Kabelhaltern (8) mit auswechselbaren Einsätzen für verschiedene Kabel (22) und/oder Crimpkontakte (25).

## Claims

1. Method for checking the quality of a crimp connection using a handheld pulling and compression device suitable for producing the crimp connection, comprising
- a drive unit (11) comprising a battery-operated electric motor (10),
- a screw drive (12) connected to the electric motor (10) and arranged in a housing body (15) for transmitting tensile and compressive forces resulting from the direction of rotation of the electric motor (10) to a coupling unit (13),
- a punch holder (14) connected to the coupling unit (13),
- a die holder (16) arranged on the housing body (15), and
- a sensor unit for capturing the tensile and compressive forces and/or the adjustment path of the punch holder (14),
comprising the steps of
- arranging a crimp holder (7) at the punch holder (14) to fix a crimp contact (25) of a crimp connection (2);
- positioning a cable holder (8) at the die holder (16) to fix a cable (22) of the crimp connection (2);
- transmitting a tensile force to the crimp connection (2) transmitted from the screw drive (12) via the coupling unit (13) through the crimp holder (7) to the crimp contact (25);
- determining the tensile strength of the crimp connection (2) by capturing the tensile force of the crimp holder (7) and/or capturing the adjustment path of the crimp holder (7) using the sensor unit.

2. The method according to claim 1, **characterized in that** a crimp connection (2) previously produced using the handheld pulling and compression device (3) is checked, wherein, to check the crimp connection (2), the crimp holder (7) is positioned in the punch holder (14) in place of a crimping punch (5) and the cable holder (8) is positioned in the die holder (16) in place of a crimping die (6).

3. The method according to one or more of the preceding claims, **characterized in that** the tensile strength is determined by means of a control unit (17) connected to the sensor unit and/or by means of a mobile handheld device (4) connected via a transmitting and receiving unit to a communication unit (18) of the handheld pulling and compression device (3) and/or a server unit (21) connected via a wireless connection to the handheld pulling and compression device (3) or the mobile handheld device (4).

4. The method according to one or more of the preceding claims, **characterized in that** the tensile force and/or the adjustment path are captured over a definable inspection duration, and the captured data are compared with reference data stored in the mobile handheld device (4) or in a database (23) of the server unit (21) to perform checking of the quality of the crimp connection (2).

5. The method according to one or more of the preceding claims, **characterized in that** the cable (22) is identified by means of the mobile handheld device (4) to select a crimp contact (25) suitable for producing the crimp connection (2), and information regarding the suitable crimp contact (25) is displayed on a display unit (19) of the mobile handheld device (4).

6. The method according to one or more of the preceding claims, **characterized in that**, to identify the cable (22),
- an electronic image of the cable (22) to be identified is captured using a camera unit of the mobile handheld device (4),
- the electronic image is transmitted via the transmitting and receiving unit to an evaluation unit (24) of the server unit (21) for the purpose of identifying the cable (22) in the server unit (21) by conducting a comparison with images of cables (22) to be identified that are stored in the database (23), and
- the information stored in the database (23) regarding the identified cable (22) is transmitted to the hand-held device (4) for the purpose of selecting the appropriate crimp contact (25).

7. The method according to one or more of the preceding claims, **characterized in that** the information regarding the crimp contact (25) suitable for producing the crimp connection (2) is stored in the database; based on the identified cable (22), the suitable crimp contact (25) is selected using the evaluation unit (24), and the information is transmitted to the mobile handheld device (4) for display on the display unit (19).

8. The method according to one or more of the preceding claims, **characterized in that**, for the purpose of identifying the cable (22) in the mobile handheld device (4) or in the evaluation unit (24) by automatically detecting the shape of the electronic image the shape type of the cable (22) and/or at least one object identifier of a label attached to the cable (22) to be identified is determined.

9. The method according to one or more of the preceding claims, **characterized in that** a range of values is stored as reference data in the database (23) of the server unit (21), the captured tensile forces and/or the adjustment path are compared with this range of values in the evaluation unit (24), and if the captured tensile forces and/or the adjustment path deviate from this range of values, an error message is displayed on the display unit (19) of the mobile handheld device (4).

10. The method according to one or more of the preceding claims, **characterized in that** information regarding crimping punches (5), crimping dies (6), crimp holders (7), and/or cable holders (8) are stored, and based on the identified cable (22) a suitable crimping punch (5) and a suitable crimping die (6) and/or a suitable crimp holder (7) and a suitable cable holder (8) are selected, and the stored information regarding these components is displayed on the display unit (19) of the mobile handheld device (4).

11. A Handheld pulling and compression device for carrying out a method for checking the quality of a crimp connection, in particular according to one of claims 1-10, comprising
- a drive unit (11) comprising a battery-operated electric motor (10),
- a screw drive (12) connected to the electric motor (10) and arranged in a housing body (15) for transmitting tensile and compressive forces resulting from the direction of rotation of the electric motor (10) to a coupling unit (13),
- a punch holder (14) connected to the coupling unit (13),
- a die holder (16) arranged on the housing body (15), and
- a sensor unit to capture the tensile and compressive forces and/or the adjustment path of the punch holder (14).

12. A system for carrying out a method for producing and/or checking the quality of a crimp connection, comprising
- a handheld pulling and compression device (3) according to claim 11,
- a mobile handheld device (4) equipped with a camera unit, a display unit (19), and a transmitting and receiving unit for wireless data transmission of information to a server unit (21), and
- at least one crimping punch (5) that can be mounted on the punch holder (14) of the handheld pulling and compression device (3) for forming a crimp contact (25) during the manufacture of the crimp connection (2),
- at least one crimping die (6) that can be mounted on the die holder (16) of the handheld pulling and compression device (2) for receiving a cable (22) during the production of the crimp connection (2),
- at least one crimp holder (7) that can be mounted on the punch holder (14) for holding a crimp contact (25) in place during checking of the crimp connection (2),
- at least one cable holder (8) that can be positioned on the die holder (16) for holding a cable (22) in place during checking of the crimp connection (2).

13. A system according to claim 12, **characterized by** a plurality of crimping punches (5) and crimping dies (6) and/or a plurality of crimp holders (7) and cable holders (8) with interchangeable inserts for different cables (22) and/or crimp contacts (25).

## Revendications

1. Procédé de vérification de la qualité d'une liaison sertie à l'aide d'un dispositif de traction et de compression portatif, adapté à la réalisation de ladite liaison, comprenant
- une unité d'entraînement (11) comportant un moteur électrique (10) alimenté par batterie,
- un mécanisme à vis (12) relié au moteur électrique (10) et disposé dans un corps du boîtier (15), destiné à transmettre les forces de traction et de compression résultant du sens de rotation du moteur électrique (10) à une unité d'accouplement (13),
- un logement du poinçon (14) relié à l'unité d'accouplement (13),
- un logement de la matrice (16) disposé sur le corps du boîtier (15) et
- une unité de capteurs destinée à détecter les forces de traction et de compression et/ou la course de réglage du logement du poinçon (14),
comprenant les étapes suivantes :
- disposer d'un support de sertissage (7) sur le logement du poinçon (14) pour fixer un contact à sertir (25) d'une liaison sertie (2) ;
- disposer d'un support de câble (8) sur le logement de la matrice (16) afin de maintenir un câble (22) de la liaison sertie (2) ;
- transmettre à la liaison à sertir (2) la force de traction transmise par le mécanisme à vis (12) via l'unité d'accouplement (13) et par l'intermédiaire du support de sertissage (7) au contact à sertir (25) ;
- déterminer de la résistance à la traction de la liaison sertie (2) par la détection de la force de traction exercée par le support de sertissage (7) et/ou par la détection de la course de réglage du support de sertissage (7) à l'aide de l'unité de capteurs.

2. Le procédé selon la revendication 1, **caractérisé en ce qu'**une liaison sertie (2) préalablement réalisée à l'aide du dispositif de traction et de compression portatif (3) est vérifiée, le support de sertissage (7) étant, pour la vérification de la liaison sertie (2), placé à la place d'un poinçon de sertissage (5) dans le logement du poinçon (14) et que le support de câble (8) est disposé à la place d'une matrice de sertissage (6) dans le logement de la matrice (16).

3. Le procédé selon l'une ou plusieurs des revendications précédentes, **caractérisé en ce que** la résistance à la traction est déterminée au moyen d'une unité de commande (17) reliée à l'unité de capteurs et/ou au moyen d'un appareil portable (4) relié, via une unité d'émission et de réception, à une unité de communication (18) du dispositif de traction et de compression portatif (3) et/ou au moyen d'une unité de serveur (21) reliée, via une connexion sans fil, au dispositif de traction et de compression portatif (3) ou à l'appareil portable (4)

4. Le procédé selon l'une ou plusieurs des revendications précédentes, **caractérisé en ce que** la force de traction et/ou la course de réglage sont détectées sur une durée d'essai définissable et que les données détectées sont comparées à des données de référence stockées dans l'appareil portable (4) ou dans une base de données (23) de l'unité serveur (21) afin de réaliser une vérification de la qualité de la liaison sertie (2).

5. Le procédé selon l'une ou plusieurs des revendications précédentes, **caractérisé en ce que** le câble (22) est identifié à l'aide de l'appareil portable (4) afin de sélectionner un contact à sertir (25) adapté à la réalisation de la liaison sertie (2), et que des informations relatives au contact à sertir (25) adapté sont affichées sur une unité d'affichage (19) de l'appareil portable (4).

6. Le procédé selon l'une ou plusieurs des revendications précédentes, **caractérisé en ce que**, pour l'identification du câble (22),
- une représentation électronique du câble (22) à identifier est capturée à l'aide d'une caméra de l'appareil portable (4),
- l'image électronique est transmise, via l'unité d'émission et de réception, à une unité d'évaluation (24) de l'unité serveur (21) afin d'identifier le câble (22) par comparaison avec des représentations de câbles (22) à identifier stockées dans la base de données (23), et
- les informations enregistrées dans la base de données (23) concernant le câble (22) identifié sont transmises à l'appareil portable (4) en vue de la sélection du contact à sertir approprié (25).

7. Le procédé selon l'une ou plusieurs des revendications précédentes, **caractérisé en ce que** les informations relatives au contact à sertir (25) adapté à la réalisation de la liaison sertie (2) sont enregistrées dans la base de données ; à partir du câble identifié (22), le contact à sertir (25) adapté est sélectionné à l'aide de l'unité d'évaluation (24) est sélectionné et que les informations sont transmises à l'appareil portable (4) en vue de leur affichage sur l'unité d'affichage (19).

8. Le procédé selon l'une ou plusieurs des revendications précédentes, **caractérisé en ce que**, pour l'identification du câble (22) dans l'appareil portable (4) ou dans l'unité d'évaluation (24), le type de forme du câble (22) et/ou au moins un identifiant d'objet correspondant à un marquage disposé sur le câble (22) à identifier sont déterminés par une reconnaissance automatique des forms de la représentation électronique.

9. Le procédé selon l'une ou plusieurs des revendications précédentes, **caractérisé en ce qu'**une plage de valeurs est enregistrée en tant que données de référence dans la base de données (23) de l'unité serveur (21) ; **en ce que** les forces de traction mesurées et/ou la course de réglage sont comparées à cette plage de valeurs dans l'unité d'évaluation (24) ; et qu'en cas d'écart des forces de traction mesurées et/ou de la course de réglage par rapport à cette plage de valeurs, un message d'erreur s'affiche sur l'unité d'affichage (19) de l'appareil portable (4).

10. Le procédé selon une ou plusieurs des revendications précédentes, **caractérisé en ce que**, dans la base de données (23) de l'unité serveur (21) ou sur l'appareil portable (4), sont enregistrées des informations relatives aux poinçons de sertissage (5), des matrices de sertissage (6), des supports de sertissage (7) et/ou des supports de câble (8) sont enregistrés ; à l'aide du câble identifié (22), un poinçon de sertissage (5) et une matrice de sertissage (6) appropriée et/ou un support de sertissage (7) approprié et un support de câble (8) approprié sont sélectionnés pour la réalisation et/ou la vérification de la liaison sertie (2), et les informations enregistrées à cet effet sont affichées sur l'unité d'affichage (19) de l'appareil portable (4).

11. Dispositif de traction et de compression portatif destiné à la mise en œuvre d'un procédé de vérification de la qualité d'une liaison sertie, en particulier selon l'une des revendications 1 à 10, comprenant
- une unité d'entraînement (11) comportant un moteur électrique (10) alimenté par batterie,
- un mécanisme à vis (12) relié au moteur électrique (10) et disposé dans un corps du boîtier (15) pour transmettre les forces de traction et de compression résultant du sens de rotation du moteur électrique (10) à une unité d'accouplement (13),
- un logement du poinçon (14) relié à l'unité d'accouplement (13),
- un logement de la matrice (16) disposé sur le corps du boîtier (15) et
- une unité de capteurs destinée à détecter les forces de traction et de compression et/ou la course de réglage du logement du poinçon (14).

12. Système destiné à la mise en œuvre d'un procédé pour réaliser et/ou vérifier la qualité d'une liaison sertie, comprenant
- un dispositif de traction et de compression portatif (3) selon la revendication 11,
- un appareil portable (4) comprenant , une unité de caméra, une unité d'affichage (19) et une unité d'émission et de réception pour la transmission de données sans fil vers une unité serveur (21), et
- au moins un poinçon de sertissage (5) pouvant être monté dans le logement du poinçon (14) du dispositif de traction et de compression portatif (3) pour le formage d'un contact à sertir (25) lors de la réalisation de la liaison sertie (2),
- au moins une matrice de sertissage (6) pouvant être disposée sur le logement de la matrice (16) du dispositif de traction et de compression portatif (2) pour recevoir un câble (22) lors de la réalisation de la liaison sertie (2),
- au moins un support de sertissage (7) pouvant être monté sur le logement du poinçon (14) pour maintenir un contact à sertir (25) lors de la vérification de la liaison sertie (2),
- au moins un support de câble (8) pouvant être disposé sur le logement de la matrice (16) pour maintenir un câble (22) lors de la vérification de la liaison sertie (2).

13. Système selon la revendication 12, **caractérisé par** une pluralité de poinçons de sertissage (5) et de matrices de sertissage (6) et/ou une pluralité de supports de sertissage (7) et de supports de câble (8) comportant des inserts interchangeables pour différents câbles (22) et/ou contacts à sertir (25).
